# EUROPÄISCHE PATENTSCHRIFT

(11) **EP 2 651 635 B1**
(45) Veröffentlichungstag und Bekanntmachung des Hinweises auf die Patenterteilung: **04.04.2018**
(21) Anmeldenummer: 11793722.7
(22) Anmeldetag: 29.11.2011
(51) Int. Cl.: B32B 7/06, B32B 7/10, B65D 51/24, B65D 53/04

(54) **DICHTSCHEIBE ZUR INDUKTIONSVERSIEGELUNG EINES BEHÄLTERS**
SEALING DISC FOR INDUCTION SEALING A CONTAINER
DISQUE D'ÉTANCHÉITÉ POUR LE SCELLEMENT PAR INDUCTION D'UN RÉCIPIENT

(30) Priorität: 14.12.2010 DE 102010054494
(43) Veröffentlichungstag der Anmeldung: 23.10.2013
(73) Patentinhaber: Alfelder Kunststoffwerke Herm. Meyer GmbH, 31061 Alfeld/Leine (DE)
(72) Erfinder: WIENING, Heinz-Rudolf, 31061 Alfeld (DE)
(74) Vertreter: Einsel, Martin
(86) Internationale Anmeldenummer: PCT/EP2011/071273
(87) Internationale Veröffentlichungsnummer: WO 2012/079971

(56) Entgegenhaltungen:
- WO-A1-01/83208
- WO-A1-2008/006123
- WO-A2-2005/100197
- CA-A1- 2 179 840
- DE-A1- 3 706 962
- DE-A1- 19 707 007
- GB-A- 2 142 911

## Beschreibung

Die Erfindung betrifft eine Dichtscheibe für das Verschließen von Mündungen von Behältern, mit einer Folie für die induktive Einkopplung von Wärme in die Dichtscheibe, mit einer Siegelschicht auf der dem Inneren des Behälters zuzuwendenden Seite der Folie zum abdichtenden Aufsiegeln der Dichtscheibe auf der Mündung des Behälters, mit Schwächungslinien in der Siegelschicht zum Bilden einer Entnahmeöffnung nach Abziehen der Folie für die induktive Einkopplung von Wärme. Die Erfindung betrifft außerdem ein Verfahren zur Verarbeitung einer solchen Dichtscheibe.

Behälter dienen zur Aufnahme von Inhalt, beispielsweise zur Aufnahme von Getränken oder pulverförmigen Lebensmitteln oder anderen Substanzen. Die Behälter weisen auf ihrer Oberseite eine Öffnung oder Mündung auf. Häufig ist es gewünscht oder auch erforderlich, diese Behältermündung mit einer scheibenförmigen Versiegelung zu verschließen, die den Inhalt dicht gegenüber äußeren Einflüssen abschließt, also mit einer Dichtscheibe.

Aus der CA 2179840 A1 ist eine Dichtscheibe bekannt. Diese besteht aus mehreren Schichten und kann auf den Rand der Mündung eines Kunststoffbehälters mittels Hitze aufgesiegelt werden. Dabei steht die Dichtscheibe in zumindest einem Bereich etwas über den Rand des Behälters vor. Man kann dort die oberen Schichten der Dichtscheibe ergreifen und nach oben abziehen. Dabei wird ein vorbestimmter Teilbereich der untersten Schicht mit abgehoben, der dann als Entnahmeöffnung stehen bleibt.

In der DE 37 06 962 A1 wird ein Deckel zum Verschließen eines Behälters durch Heißsiegeln beschrieben. Der Deckel besteht insbesondere aus einem Substrat aus mehreren Schichten. Ein Öffnungsteil wird durch einen Einschnitt begrenzt. Um den Deckel zu öffnen, wird eine äußere Abziehschicht an einem freien Teil gefasst und nach oben gezogen. Die Abziehschicht lässt bei diesem Vorgang wesentliche Teile der unteren Schicht stehen und löst sich von ihnen. Lediglich in dem Bereich des Öffnungsteils innerhalb des Einschnitts werden auch die unteren Schichten nach oben gezogen, wodurch eine Öffnung entsteht.

Die WO 01/83208 A1 beschreibt eine heißsiegelbare Mehrschichtfolie für wiederverschließbare Verpackungen. Eine Trägerschicht besitzt an ihrer dem Füllgut der Packung zugewandten Seite eine heißsiegelbare Schicht. Außerdem ist eine Selbstklebeschicht aus drucksensitivem Klebstoff vorgesehen. Um eine Öffnung zur Entnahme des Füllguts zu definieren, besitzt die Trägerschicht Schwächungslinien.

Aus der WO 2005/100197 A2 ist ein Deckel mit Öffnungshilfe in Form einer Grifflasche zum Verschließen von Behältern bekannt, der aus einer zumindest zweilagigen Verband besteht. Die dem Behälter zugewandte Verbundlage siegelt gegen den Behältermund. Der Deckel bildet beim Trennen der Verbundlagen eine Entnahmeöffnung. Diese Entnahmeöffnung ist durch die Verwendung einer Schicht aus drucksensitivem Kleber zwischen zwei Verbundlager des Deckels wieder lose verschließbar.

Aus der WO 2008/006123 A1 und der WO 2009/155630 A2 sind Dichtscheiben zum Verschließen eines Bechers bekannt. Diese Dichtscheiben können durch eine Induktionsversiegelung auf dem Oberrand eines Bechers befestigt werden. Die Dichtscheiben weisen hierzu eine Aluminiumfolie auf. Auf der Unterseite der Aluminiumfolie, also auf der dem Becherinhalt benachbarten Seite, ist eine sehr dünne Kunststofffolie aufgebracht.

Es ist nun möglich, mittels Induktionsversiegelung diese Folie fest auf dem Oberrand eines Bechers anzubringen. Wird Wirbelstrom in die Aluminiumfolie von oben induziert, wird sie entsprechend erwärmt, ebenso die unter ihr befindliche Kunststofffolie. Dies gilt auch für den Oberrand des Bechers, bevorzugt eines Kunststoffbechers. Es entsteht eine relativ feste Verbindung der Kunststofffolie mit dem Oberrand des Bechers.

Der Benutzer kann dann bei Bedarf die Aluminiumfolie abziehen, die sich leichter von dem Becher löst, und hat dann nur noch die sehr dünne Kunststofffolie vor sich. Diese sehr dünne Kunststofffolie kann gezielt durch thermische Einwirkung oder durch einen Laserschnitt mit einer Ausnehmung oder Schwächung versehen werden. Durch diese Ausnehmung oder Schwächung kann gezielt eine begrenzte Entnahmeöffnung oder Trinköffnung hergestellt werden, durch die der Benutzer eine dosierte Entnahme des Behälterinhalts erreichen kann.

Dadurch kann vermieden werden, dass der Benutzer eine von ihm nicht gewünschte zu große Entnahmemenge auf einmal aus dem Behälter entnimmt, was insbesondere bei einem Trinkvorgang von so verpackten Flüssigkeiten nicht gewünscht ist, ebenso auch beim Ausgießen derartiger Flüssigkeiten aus größeren Behältern, das unter Umständen schwallartig erfolgen kann, was ebenfalls nicht gewünscht ist. Durch das gezielte Vorsehen kleiner und begrenzter sowie sauber definierter Entnahmeöffnungen kann dies vermieden werden.

Bei diesem sehr sinnvollen und nützlichen Vorschlag stellt sich allerdings noch das Problem, dass nach dem erfolgten Abziehen der schützenden Aluminiumschicht ein sofortiger Verbrauch insbesondere bei empfindlichen Füllgütern erfolgen muss, da durch die Entnahmeöffnung beziehungsweise Trinköffnung sofort Sauerstoff an das Füllgut im Inneren des Behälters gelangen kann.

Aufgabe der Erfindung ist es demgegenüber, eine Möglichkeit vorzuschlagen, mit der ein Verschluss eines Behälters möglich wird, der alle Vorteile gleichzeitig aufweist: Er soll induktionsversiegelbar sein, er soll eine definierte Entnahmeöffnung aufweisen, und er soll eine Möglichkeit besitzen, trotz Öffnung des Behälters durch den Endverbraucher eine längere Aufbewahrungszeit zu ermöglichen.

Diese Aufgabe wird erfindungsgemäß bei einer gattungsgemäßen Dichtscheibe dadurch gelöst, dass auf der von der Siegelschicht abgewandten Seite der Folie eine oder mehrere Schichten vorgesehen sind, die lösbar mit der Folie verbunden sind, dass die Schichten auf der von der Siegelschicht abgewandten Seite sich beim Öffnungsvorgang leichter von der Folie lösen, als die Siegelschicht von der Folie, dass die Schichten auf der von der Siegelschicht abgewandten Seite sich beim Öffnungsvorgang leichter von der Folie lösen, als die Siegelschicht von der Mündung des Behälters, und dass die Schichten so ausgebildet sind, dass sie die Entnahmeöffnung nach Abziehen der Folie und Wiederauflegen der Schichten auf die Siegelschicht dicht verschließen.

Mit einer derartigen Konstruktion wird die Aufgabe problemlos gelöst. Durch die metallische Schicht und die auf der metallischen Schicht benachbart zum Behälterinneren liegende Versiegelungsschicht wird eine Induktionsversiegelung der gesamten Konstruktion auf der Mündung des Behälters möglich.

Durch die zuvor eingebrachten Schwächungslinien entstehen beim Abziehen der metallischen Folie Entnahmeöffnungen, da die Bereiche der Versiegelungsschicht innerhalb der Schwächungslinien herausgebrochen werden und mit der metallischen Folie abgezogen werden.

Durch die Schichten, insbesondere die Trägerschicht, die beim Abschrauben in der Schraubkappe verbleibt, wird eine Wiederverschließbarkeit möglich, indem nämlich nach dem Entnehmen einer gewünschten Menge des Füllgutes durch die Entnahmeöffnungen die Schraubkappe wieder auf die Mündung gedreht wird. Die Trägerschicht verschließt dann die Entnahmeöffnungen, da sie sich flächig und fest oben auf die stehengebliebene Versiegelungsschicht legt. Durch diesen Verschluss wird es dem Sauerstoff und sonstigen Fremdpartikeln aus der Umgebungsluft unmöglich, durch die Entnahmeöffnungen in das Behälterinnere zu gelangen und dort die Haltbarkeit zu beeinträchtigen. Ebenso ist es dem noch verbliebenen Füllgut im Behälterinneren nicht möglich, unbeabsichtigt durch die Entnahmeöffnungen in die Umgebung zu gelangen. Auch etwa oberhalb des Füllgutes befindliches Aroma, das sich vielfach bei flüssigem und auch pulverförmigen Füllgut entwickelt, entweicht nicht aus den Entnahmeöffnungen, sondern verbleibt im Behälterinneren und kann somit vom Benutzer beim nächsten Öffnen des Behälters durch Abdrehen der Schraubkappe angenehm wahrgenommen werden und erweckt nach wie vor den Eindruck von Frische.

Dieser Vorgang lässt sich mehrfach wiederholen, wenn das Füllgut in dem Behälter in mehreren Portionen nacheinander verbraucht werden soll. Die Haltbarkeit erreicht zwar nicht die Werte, die bei einem original induktionsversiegelten Verschluss mit der Dichtscheibe erreicht wird, gleichwohl sind ausgezeichnete Haltbarkeitsdauern erreichbar.

Durch die erfindungsgemäße Konzeption werden auch noch weitere Vorteile erreicht, die für den Fachmann an sich nicht unmittelbar mit der Aufgabenstellung verknüpft sind und die auch mit den bekannten und sonst gut funktionierenden Konzeptionen aus der WO 2008/006123 A1 und der WO 2009/155630 A2 nicht erreichbar sind. Die gesamte Dichtscheibe wird nämlich durch das Vorsehen der Trägerschicht beziehungsweise des sogenannten Reseal-Teils wesentlich besser verarbeitbar. Die Dichtscheibe bestehend aus der metallischen Folie und der darauf angebrachten Versiegelungsschicht ist so dünn, dass sie schlecht verarbeitbar und vor allem schlecht handhabbar ist. Sie neigt zum Verknicken in Handhabungsmaschinen und kann sich unter Umständen auch wellen.

Versucht man, diese aus der metallischen Folie und der Versiegelungsschicht bestehende Dichtscheibe dicker zu machen, indem man die metallische Folie dicker macht, so steigt der Materialverbrauch der relativ kostspieligen metallischen Folie sofort enorm an, ohne einen anderen Vorteil oder nutzen zu ergeben.

Die erfinderische Trägerschicht dagegen kann aus einem vergleichsweise kostengünstigen und trotzdem genau den Wünschen entsprechenden Material hergestellt werden.

Die Gesamtkonstruktion kann dann deutlich besser angefasst werden, wobei hier ein maschinelles Anfassen in erster Linie gemeint ist. Die Dichtscheibe lässt sich leicht transportieren, leicht in Schraubkappen einlegen und auch im Übrigen einfach handhaben.

Dadurch entsteht noch ein weiterer großer Vorteil. Die gesamte Dichtscheibe, bestehend also aus der Trägerschicht beziehungsweise dem Reseal-Teil und der metallischen Folie nebst Versiegelungsschicht und eingebrachten Schwächungslinien kann bereits beim Hersteller der Schraubkappen in die Schraubkappe eingelegt werden. Die komplette Schraubkappe mit der bereits eingelegten Dichtscheibe wird dann an den Abfüller des Produktes geliefert.

Dieser Abfüller des Produktes muss sich um die gesamte Herstellung und Zusammenfügung der einzelnen Schichten nicht mehr kümmern, da er lediglich in entsprechenden Maschinen ein verschließendes Aufschrauben der Schraubkappen und das anschließende Versiegeln der mit der Schraubkappe aufgeschraubten Dichtscheibe auf der Behältermündung vornehmen muss. Das bedeutet insbesondere auch, dass diese mechanischen Aufgaben räumlich und zeitlich getrennt von der Abfüllung des Füllgutes erfolgen kann, so dass insbesondere auch die bei der Behandlung von Nahrungsmitteln und Getränken besonders wichtigen und zu beachtenden Vorschriften und Randbedingungen problemlos erfüllbar sind, da schon alle maschinellen zusammenfügenden Schritte andernorts erledigt sind.

Ein weiterer Vorteil besteht darin, dass beim verschließenden Aufschrauben der Schraubkappe mit der erfindungsgemäßen Dichtscheibe kein nennenswerter Anpressdruck vorgesehen werden muss, ganz anders als etwa bei Dichtscheiben, die durch Kondiktion (statt Induktion) versiegelt werden. Für den Anpressdruck steht ohne Weiteres die Trägerschicht in ihrer Elastizität zur Verfügung, die beim Zuschrauben der Schraubkappe, also beim Verschließen des Behälters, leicht zusammengedrückt wird und damit die nötigen Anpresskräfte ausübt.

Darüber hinaus wird durch die Schraubkappe auch ein Ausgleich der Fertigungstoleranzen der Mündung des Behälters möglich. Auch dies wird durch die Elastizität der Trägerschicht unterstützt. Durch diesen Ausgleich der Mündungstoleranzen wird auch die Dichtigkeit, die mit der Dichtscheibe erreicht wird, noch weiter optimiert.

Das erfindungsgemäße Trennverhalten der verschiedenen Schichten und Schichtenpakete voneinander kann durch geeignete Einstellung von dazwischenliegenden adhäsiven Werkstoffen erzielt werden, beispielsweise durch Klebschichten oder Wachsschichten. Diese können gezielt darauf eingestellt werden, dass sich bestimmte Schichten oder Schichtenpakete voneinander schon bei Ausübung geringerer Kräfte lösen, als andere Schichten.

So wird sichergestellt, dass die Siegelschicht noch auf der Behältermündung verbleibt, während sich die Folie bereits von der Siegelschicht trennt und ebenso auch die Trägerschichten sich von der Folie bereits getrennt haben.

Abgesehen von diesen mechanischen Trennkräften ist es auch möglich, durch eine entsprechende thermische Behandlung nach dem Füllen und Verschließen des Behälters diese Wirkungen zu erzielen oder zu beeinflussen. Auf diese Weise kann die vorteilhafte gemeinsame Handhabung der Dichtscheibe beim Einlegen in eine Schraubkappe und beim Verschließen des Behälters sichergestellt werden, wobei dann durch eine Erwärmung im Anschluss an diesen Vorgang beispielsweise gezielt eine Wachsschicht so aufgeschmolzen wird, dass sich entsprechende Schichten trennen. Dies gilt insbesondere für die Schichten auf der von der Behältermündung abgewandten Seite der Folie, die später den sogenannten Reseal-Teil bilden, und der Folie selbst. Zum Aufschrauben des Behälters muss dann vom Endverbraucher überhaupt keine Kraft aufgewendet werden, um diese beiden Schichtenpakete voneinander zu trennen.

In anderen Fällen mag dies gerade nicht gewünscht sein, damit der Endverbraucher noch erkennen kann, dass er der Erstöffner des Verschlusses ist. Es wird also möglich, beide einander entgegengesetzte Wünsche in verschiedenen Ausführungsformen der Erfindung zu erfüllen.

Eine weitere Möglichkeit entsteht dadurch, dass zwischen den Schichten auf der von der Siegelschicht abgewandten Seite der Folie und der Folie eine mit der Folie fest verbundene Schaumschicht vorgesehen ist.

Durch das Vorsehen einer solchen zusätzlichen Schaumschicht können Mündungstoleranzen der Behältermündung und des Deckels noch besser ausgeglichen werden.

Durch eine solche Schaumschicht sind auch weitere Eigenschaften einstellbar. So kann die Folie steifer ausgebildet werden und klemmt dann fester in einem Schraubverschluss, was unter Umständen gewünscht wird.

Durch eine solche Schaumschicht kann auch eine Wärmebarriere aufgebaut werden, damit die bei der Induktion in die Metallfolie induzierte Wärme nicht in den oberen Teil der Schraubkappe gelangt.

Durch die Schaumschicht wird auch die Metallfolie und die gesamte Dichtscheibe reißfester und kann daher auch anderen Anforderungen beim Verschließvorgang oder bei sonstigen Handhabungsvorgängen besser widerstehen.

Schließlich kann durch das Vorsehen einer solchen Schaumschicht auch erreicht werden, dass die Schaumschicht mit einer nach außen vorspringenden Grifflasche oder mit einer nach oben vorspringenden Grifflasche ausgerüstet ist.

Für derartige Grifflaschen gibt es verschiedene Vorschläge, wie dies beispielsweise in der EP 1 181 217 B1 oder in der EP 0 717 710 B1 für eine nach oben vorspringende Grifflasche erörtert wird. Die Grifflasche befindet sich also auf der vom Behälterinneren abgewandten Seite der Dichtscheibe, beispielsweise als in Falten gelegte Schaumschicht oder auch als teilweise abklappbare Schaumschicht.

Nach außen gerichtete Grifflaschen sind beispielsweise aus der EP 0 697 345 B1 oder der EP 0 668 221 B1 bekannt. Hier ragt über den Umfangsrand einer üblicherweise runden Dichtscheibe eine Grifflasche nach außen.

Beide Arten von Grifflaschen können vom Benutzer beim Öffnungsvorgang des Behälters mit den Händen leicht gegriffen werden, wodurch ein Abziehen der Schaumschicht gemeinsam mit den mit dieser verbundenen Schicht möglich ist, insbesondere also mit einer metallischen Folie im Sinne der vorliegenden Erfindung.

Auf diese Weise kann das Öffnen des Behälters ebenfalls für den Benutzer praktikabler und anwenderfreundlicher gestaltet werden, da er mittels dieser Laschen dann die Metallfolie einfacher abziehen kann.

Weitere bevorzugte Merkmale der Erfindung sind in den Unteransprüchen angegeben.

Im Folgenden wird anhand der Zeichnung ein Ausführungsbeispiel der Erfindung näher beschrieben. Es zeigen:
- **Figur 1**: einen Schnitt durch einen Behälter mit der erfindungsgemäßen Dichtscheibe; und

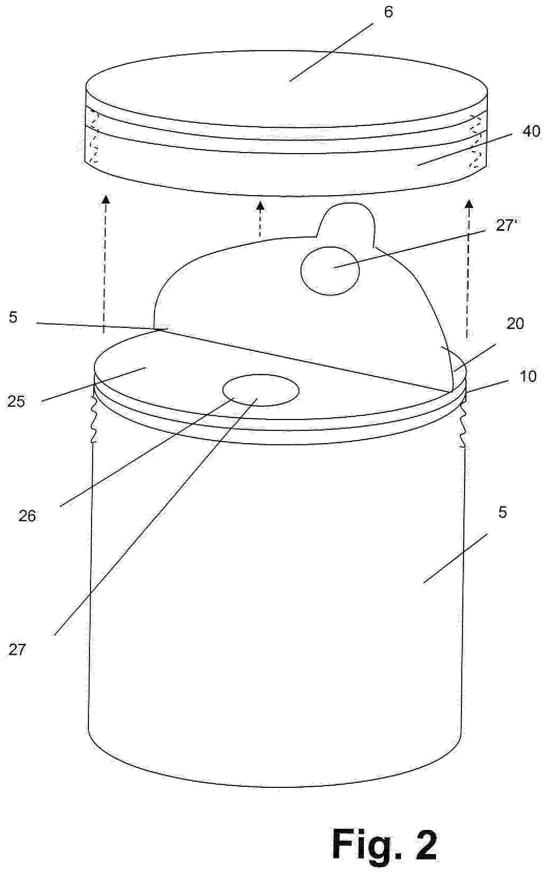

- **Figur 2**: eine perspektivische Darstellung eines Behälters bei einer Öffnung.

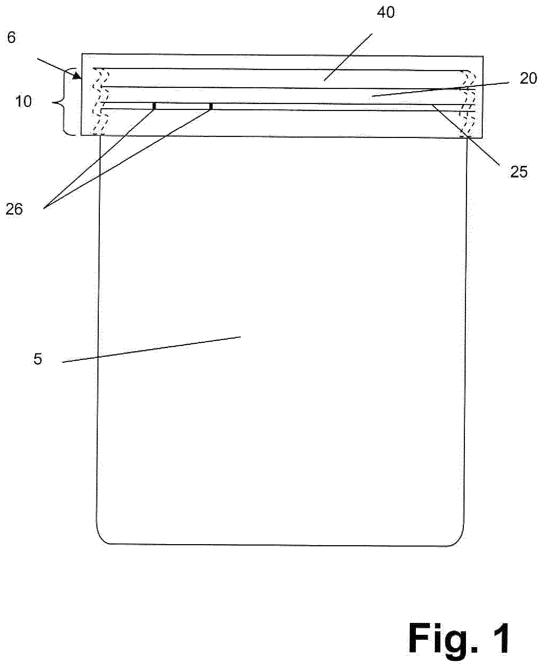

In der in Figur 1 dargestellten Anordnung aus einem Behälter 5 mit einer Schraubkappe 6 und einer zwischen der Mündung des Behälters 5 und der Schraubkappe 6 platzierten Dichtscheibe 10 ist zu erkennen, dass für diese Dichtscheibe 10 mehrere Schichten beziehungsweise Folien übereinander angeordnet sind. Die komplette Dichtscheibe 10 wird auf den Rand eines Behälters 5 aufgebracht, von dem man insbesondere die obere Mündung im Schnitt schematisch angedeutet findet.

Der Behälter 5 kann sehr unterschiedliche Formen besitzen und ist (nicht dargestellt) beispielsweise mit einem Getränk oder mit einem pulverförmigen Lebensmittel oder ähnlichen Stoffen gefüllt.

Der Behälter 5 ist mit einer Schraubkappe 6 verschlossen, die ebenfalls schematisch angedeutet ist. Vor der Erstöffnung ist die Schraubkappe 6 ununterbrochen fest zugeschraubt. Bei der Erstöffnung wird die Schraubkappe 6 durch den Endverbraucher erstmals abgenommen. Zu diesem Zweck dreht er die Schraubkappe und entfernt sie von dem Behälter 5.

Die Dichtscheibe 10 besitzt als zentrales Element in der Erfindung eine Folie 20 für die induktive Einkopplung von Wärme in die Dichtscheibe 10. Diese Folie 20 besteht aus einem elektrisch leitfähigen Material, insbesondere einem Metall, üblicherweiser Aluminium.

Diese Folie 20 ist auf der der Mündung des Behälters 5 zugewandten Seite mit einer Siegelschicht 25 versehen. Die Siegelschicht 25 ist durch Anwendung eines Laserstrahls oder auch thermisch oder in anderer Form mit Schwächungslinien 26 versehen.

Auf der von der Siegelschicht 25 abgewandten Seite der Folie 20 befindet sich außerdem noch eine Trägerschicht 40. Die Trägerschicht 40 besteht aus einem Kunststoff. Sie ist zweckmäßigerweise flexibel, um bestimmte Ungleichmäßigkeiten ausgleichen zu können. Diese Trägerschicht 40 ist mit der Folie 20 durch eine Klebschicht verbunden, die weniger fest ist und weniger Klebkraft aufweist, als die Verbindung von Siegelschicht und Aluminiumschicht oder auch als die Erfindung von weiterer Schichten, mit denen die Aluminiumschicht auf ihrer Oberseite ausgestattet sein kann, beispielsweise einer Bedruckungsschicht für den Aufdruck mit Kennzeichnungen oder Werbung.

Die Klebschicht zwischen der Trägerschicht 40 und der Folie 20 kann auch schon herstellerseitig durch thermische Einwirkung aufgelöst oder entfernt werden. Dies kann beispielsweise bei einer Wachsschicht als Klebschicht dadurch erfolgen, dass diese nach dem Füllen und Verschließen des Behälters 5 erwärmt wird, sodass das Wachs schmilzt und so behandelt ist, dass es beim erneuten erkalten nicht wieder zu einer Verbindung der Trägerschicht 40 mit der Folie 20 führt. Dann ist aus Sicht des Endverbrauchers beim Öffnen gar keine Kraft mehr zum Lösen der Verbindung von Trägerschicht 40 und Folie 20 erforderlich, da diese ohnehin in diesem Moment nur noch lose aufeinander liegen.

Bevorzugt wird man allerdings hier noch eine leichte Klebkraft aufrecht erhalten, um dem Endverbraucher eine Originalitätsüberprüfung zu ermöglichen, ihm also durch die erforderliche Kraft beim Lösen anzuzeigen, dass er der Erstöffner der Schraubkappe ist. Bei bestimmten Anwendungsfällen mag dies aber nicht erforderlich oder nicht gewünscht sein, was durch eine geeignete Wahl der Klebschicht zwischen der Trägerschicht 40 und der Folie 20 auf diese Weise sichergestellt werden kann.

Nach dem Füllen des Behälters 5 mit Füllgut wird die gesamte Dichtscheibe 10 auf die Behältermündung gelegt, beziehungsweise dort platziert. Dann wird induktiv in die Dichtscheibe 10 und damit insbesondere auch in die Folie 20 Wärme eingekoppelt. Diese Wärme bringt die Siegelschicht 25 zum Aufschmelzen, insbesondere auch dort, wo die Siegelschicht 25 unmittelbar auf dem Rand der Mündung des Behälters 5 aufliegt.

Auch diese Mündung des Behälters 5 wird dabei erwärmt.

Die Siegelschicht 25 verbindet sich also in diesem Bereich fest mit dem oberen Rand des Behälters 5. Sie wird gewissermaßen aufgesiegelt.

Schließlich wird noch die Schraubkappe 6 beim Verschließen des Behälters über diesen Bereich gesetzt und hält damit die gesamte Dichtscheibe aus Siegelschicht 25, Folie 20 zur Einkopplung von Wärme, Klebschicht und Trägerschicht 40 zusätzlich fest auf dem Behälter.

Bei der Erstöffnung wird nun die Schraubkappe 6 erstmals abgenommen. Der Endbenutzer schraubt also den Behälter auf. Dabei löst sich die Trägerschicht 40 gemeinsam mit der Schraubkappe 6 von dem Becher 5 mit der darauf verbleibenden Siegelschicht 25 und Folie 20, da wie erwähnt, die Klebschicht zwischen der Folie 20 und der Trägerschicht 40 das schwächste Verbindungselement ist.

Der Endbenutzer blickt also nunmehr auf die Oberseite der vor ihm liegenden Folie 20, möglicherweise auf dort angebrachte Werbung oder auch sinnvolle Hinweise an ihn als Endbenutzer betreffend das weitere ihm empfohlene Vorgehen zur Öffnung des Behälters und zum Wiederverschließen.

Er kann dann diese Folie abziehen, beispielsweise über eine Lasche, mit der diese Folie greifbar ist.

Zieht er diese Folie 20 ab, so verbleibt noch die Siegelschicht 25 auf dem Behälter.

Allerdings werden bei diesem Abziehvorgang diejenigen Bereiche der Versiegelungsschicht 25, die mit den Schwächungslinien 26 umrandet sind, mit nach oben abgehoben. Die Schwächungslinien 26 sind schwächer als die Kräfte, die die Folie 20 auf der Siegelschicht 25 und dem Mündungsrand des Behälters 5 halten und trennen sich mithin gemeinsam mit der Folie 20 von dem Becher 5 und der darauf verbleibenden Siegelschicht 25.

Das führt nun aber dazu, dass sich in der auf dem Mündungsrand des Bechers 5 verbleibenden Versiegelungsschicht 25 "Löcher" bilden, nämlich Entnahmeöffnungen 27. Derjenige Teil der Versiegelungsschicht 25 innerhalb einer beispielsweise kreisförmigen Schwächungslinie 26 wird demzufolge an der abgezogenen Folie 20 verbleiben und mit abgehoben werden, was durch das Bezugszeichen 27 angedeutet ist.

Es wird also möglich, durch diese Entnahmeöffnungen 27 den Inhalt des Bechers beziehungsweise Behälters 5 zu entnehmen, obwohl die Versiegelungsschicht 25 den Behälter noch verschließt.

Durch entsprechende Anordnung dieser Entnahmeöffnungen 27 benachbart zum Rand des Behälters 5 können auf diese Weise Trinköffnungen geschaffen werden, wenn es sich um einen Behälter 5 für Getränke handelt.

Nun besteht aber die Möglichkeit, wenn der Benutzer nach der Entnahme eines bestimmten Anteils des Füllgutes den Rest des Füllgutes für einen späteren Zeitpunkt aufbewahren möchte, die Schraubkappe 6 wieder auf den Behälter zu schrauben. In der Schraubkappe befindet sich noch die Trägerschicht 40. Diese Trägerschicht 40 ist vollflächig und legt sich nun beim Zuschrauben der Schraubkappe 6 wieder auf die Oberseite der Mündung auf. Es fehlt jetzt allerdings die vorher noch vorhandene Folie 20. Stattdessen legt sich also die Trägerschicht 40 nun auf die Oberseite der Versiegelungsschicht 25 und verschließt dabei gleichzeitig die Entnahmeöffnungen 27. Das Füllgut in dem Behälter 5, das beispielsweise bei einer Schrägstellung oder einem Schütteln des Behälters 5 aus den Entnahmeöffnungen 27 herausdringen könnte, wird jetzt von der Trägerschicht 40 daran gehindert.

Ebenso ist es auch nicht mehr möglich, dass Sauerstoff oder womöglich Fremdkörper von außen durch diese Entnahmeöffnungen 27 in das Füllgut im Inneren des Behälters 5 gelangen können. Sie werden daran rein mechanisch durch die Schraubkappe und durch die beiden dicht aufeinanderliegenden Schichten, nämlich die Versiegelungsschicht 25 und die Trägerschicht 40, gehindert, zwischen denen sie nicht hinein diffundieren können.

Natürlich ist dieser Verschluss nicht so dicht und dauerhaft, wie der Originalverschluss mit der induktionsversiegelten Anordnung aus der Folie 20 mit der noch nicht an den Schwächungslinien 26 aufgebrochenen Versiegelungsschicht 25, gleichwohl aber ist er in der Lage, für einen entsprechend zuverlässigen und durchaus längeren Zeitraum dass Füllgut im Inneren des Behälters 5 gegenüber äußeren Einwirkungen und somit einer Oxidierung zu schützen und insbesondere auch ein versehentliches Ausschütten zu verhindern.

### Bezugszeichenliste

- 5: Behälter
- 6: Schraubkappe

- 10: Dichtscheibe

- 20: Folie
- 25: Siegelschicht
- 26: Schwächungslinien
- 27: Entnahmeöffnungen
- 27': Abgehobener Bereich der Siegelschicht 25 innerhalb der Schwächungslinie 26

- 40: Trägerschicht

## Patentansprüche

1. Dichtscheibe (10) für das Verschließen von Mündungen von Behältern (5), **mit einer Folie** (20) für die induktive Einkopplung von Wärme in die Dichtscheibe (10),
**mit einer Siegelschicht** (25) auf der dem Inneren des Behälters (5) zuzuwendenden Seite der Folie (20) zum abdichtenden Aufsiegeln der Dichtscheibe (10) auf der Mündung des Behälters (5),
**mit Schwächungslinien** (26) in der Siegelschicht (25) zum Bilden einer Entnahmeöffnung (27) nach Abziehen der Folie (20) für die induktive Einkopplung von Wärme,
**wobei** auf der von der Siegelschicht (25) abgewandten Seite der Folie (20) eine oder mehrere Schichten (40) vorgesehen sind, die lösbar mit der Folie (20) verbunden sind,
**wobei** die Schichten (40) auf der von der Siegelschicht (25) abgewandten Seite sich beim Öffnungsvorgang leichter von der Folie (20) lösen, als die Siegelschicht (25) von der Folie,
**wobei** die Schichten (40) auf der von der Siegelschicht (25) abgewandten Seite sich beim Öffnungsvorgang leichter von der Folie (20) lösen, als die Siegelschicht (25) von der Mündung des Behälters (5), und
**wobei** die Schichten (40) so ausgebildet sind, dass sie die Entnahmeöffnung (27) nach Abziehen der Folie (20) und Wiederauflegen der Schichten (40) auf die Siegelschicht (25) dicht verschließen.

2. Dichtscheibe (10) nach Anspruch 1,
**dadurch gekennzeichnet,**
**dass** die Folie (20) eine metallische Folie ist.

3. Dichtscheibe (10) nach Anspruch 2,
**dadurch gekennzeichnet,**
**dass** die metallische Folie (20) eine Aluminiumfolie ist.

4. Dichtscheibe (10) nach einem der vorstehenden Ansprüche,
**dadurch gekennzeichnet,**
**dass** die Schichten (40) eine Trägerschicht aus einem geschäumten Polymer oder aus Karton aufweisen.

5. Dichtscheibe (10) nach einem der vorstehenden Ansprüche,
**dadurch gekennzeichnet,**
**dass** zwischen den Schichten (40) auf der von der Siegelschicht (25) abgewandten Seite der Folie (20) und der Folie (20) eine mit der Folie (20) fest verbundene Schaumschicht vorgesehen ist.

6. Dichtscheibe (10) nach Anspruch 5,
**dadurch gekennzeichnet,**
**dass** die Schaumschicht mit einer nach außen vorspringenden Grifflasche oder mit einer nach oben vorspringenden Grifflasche ausgerüstet ist.

7. Verfahren zur Verarbeitung einer Dichtscheibe (10) nach einem der vorstehenden Ansprüche,
**dadurch gekennzeichnet,**
**dass** der Behälter (5) gefüllt wird,
**dass** der Behälter (5) mit einer Dichtscheibe (10) nach einem der vorstehenden Ansprüche verschlossen wird, und
**dass** die Schichten (40) auf der von der Siegelschicht (25) abgewandten Seite der Folie (20) herstellerseitig bereits nach dem Füll- und Verschließvorgang des Behälters (5) mittels thermischer Einwirkung von der Folie (20) gelöst werden.

## Claims

1. A sealing disc (10) for the closing of orifices of containers (5),
having a foil (20) for the inductive coupling of heat into the sealing disc (10), having a sealing layer (25) on the side of the foil (20) that is to face the interior of the container (5) in order to tightly seal the sealing disc (10) on the orifice of the container (5),
having weakness lines (26) in the sealing layer (25) for forming a removal opening (27) after pulling off the foil (20) for the inductive coupling of heat, wherein one or more layers (40) which are connected releasably to the foil (20) are provided on the side of the foil (20) facing away from the sealing layer (25),
wherein during the opening process, the layers (40) on the side facing away from the sealing layer (25) are separated more easily from the foil (20) than the sealing layer (25) from the foil,
wherein during the opening process, the layers (40) on the side facing away from the sealing layer (25) are separated more easily from the foil (20) than the sealing layer (25) from the orifice of the container (5), and
wherein the layers (40) are formed so that they tightly close the removal opening (27) after the foil (20) has been pulled off and the layers (40) are again placed on the sealing layer (25).

2. The sealing disc (10) according to claim 1,
**characterised in**
**that** the foil (20) is a metallic foil.

3. The sealing disc (10) according to claim 2,
**characterised in**
**that** that the metallic foil (20) is an aluminum foil.

4. The sealing disc (10) according to one of the preceding claims,
**characterised in**
**that** the layers (40) have a support layer composed of a foamed polymer or of cardboard.

5. The sealing disc (10) according to one of the preceding claims,
**characterised in**
**that between** the layers (40) on the side of the foil (20) facing away from the sealing layer (25) and the foil (20) there is provided a foam layer firmly joined to the foil (20).

6. The sealing disc (10) according to claim 5,
**characterised in**
**that** the foam layer is furnished with an outwardly projecting gripping tab or with an upwardly projecting gripping tab.

7. A method for processing a sealing disc (10) according to one of the preceding claims,
**characterised in**
**that** the container (5) is filled, in
**that** the container (5) is closed by a sealing disc (10) according to one of the preceding claims, and in
**that** the layers (40) on the side of the foil (20) facing away from the sealing layer (25) are already released from the foil (20) by means of thermal action by the manufacturer after the filling and closing process of the container (5).

## Revendications

1. Disque d'étanchéité (10) pour la fermeture d'embouchures de récipients (5),
avec un film (20) pour le couplage inductif de chaleur dans le disque d'étanchéité (10),
avec une couche de scellement (25) sur le côté à tourner vers l'intérieur du récipient (5) du film (20) pour le scellement étanche du disque d'étanchéité (10) sur l'embouchure du récipient (5),
avec des lignes d'affaiblissement (26) dans la couche de scellement (25) pour la formation d'une ouverture de prélèvement (27) après le retrait du film (20) pour le couplage inductif de chaleur,
dans lequel sur le côté éloigné de la couche de scellement (25) du film (20) une ou plusieurs couches (40) sont prévues, lesquelles sont raccordées de manière détachable au film (20),
dans lequel les couches (40) se détachent sur le côté éloigné de la couche de scellement (25) lors du processus d'ouverture plus facilement du film (20) que la couche de scellement (25) du film,
dans lequel les couches (40) se détachent sur le côté éloigné de la couche de scellement (25) lors du processus d'ouverture plus facilement du film (20) que la couche de scellement (25) de l'embouchure de récipient (5), et
dans lequel les couches (40) sont réalisées de sorte à fermer de manière étanche l'ouverture de prélèvement (27) après le retrait du film (20) et la repose des couches (40) sur la couche de scellement (25).

2. Disque d'étanchéité (10) selon la revendication 1,
**caractérisé en ce**
**que** le film (20) est un film métallique.

3. Disque d'étanchéité (10) selon la revendication 2,
**caractérisé en ce**
**que** le film métallique (20) est un film d'aluminium.

4. Disque d'étanchéité (10) selon l'une quelconque des revendications précédentes,
**caractérisé en ce**
**que** les couches (40) présentent une couche support en un polymère expansé ou en carton.

5. Disque d'étanchéité (10) selon l'une quelconque des revendications précédentes,
**caractérisé en ce**
**qu'**une couche expansée raccordée fixement au film (20) est prévue entre les couches (40) sur le côté éloigné de la couche de scellement (25) du film (20) et le film (20).

6. Disque d'étanchéité (10) selon la revendication 5,
**caractérisé en ce**
**que** la couche expansée est équipée d'une languette de préhension en saillie vers l'extérieur ou d'une languette de préhension en saillie vers le haut.

7. Procédé de traitement d'un disque d'étanchéité (10) selon l'une quelconque des revendications précédentes,
**caractérisé en ce**
**que** le récipient (5) est rempli,
**que** le récipient (5) est fermé avec un disque d'étanchéité (10) selon l'une quelconque des revendications précédentes, et
**que** les couches (40) sont détachées sur le côté éloigné de la couche de scellement (25) du film (20) côté fabricant juste après le processus de remplissage et de fermeture du récipient (5) au moyen d'une action thermique du film (20).
